# EUROPEAN PATENT SPECIFICATION

(11) **EP 4 047 288 B1**
(45) Date of publication and mention of the grant of the patent: **31.12.2025**
(21) Application number: 21207696.2
(22) Date of filing: 11.11.2021
(51) Int. Cl.: F25B 13/00, B01D 19/00, F24D 3/18, F24D 19/08, F24F 11/36, F25B 49/00

(54) **HEAT MEDIUM CIRCULATION SYSTEM**
SYSTEM FÜR HITZEMEDIUMZIRKULATION
SYSTÈME DE CIRCULATION DE MILIEU THERMIQUE

(30) Priority: 18.02.2021 JP 2021023862
(43) Date of publication of application: 24.08.2022
(73) Proprietor: Panasonic Intellectual Property Management Co., Ltd., Osaka-shi, Osaka 540-6207 (JP)
(72) Inventor: AOYAMA, Shigeo, Osaka-shi, Osaka 540-6207 (JP); YAMAOKA, Yuki, Osaka-shi, Osaka 540-6207 (JP); MORIWAKI, Shunji, Osaka-shi, Osaka 540-6207 (JP); YOSHIDA, Jun, Osaka-shi, Osaka 540-6207 (JP); NAKATANI, Kazuhito, Osaka-shi, Osaka 540-6207 (JP)
(74) Representative: Eisenführ Speiser

(56) References cited:
- EP-A1- 0 027 179
- EP-A1- 3 587 947
- WO-A1-2019/239556
- GB-A- 2 231 508
- US-A- 4 602 923

## Description

### [TECHNICAL FIELD]

The present invention relates to a heat medium circulation system.

### [BACKGROUND TECHNIQUE]

Patent document 1 discloses an air conditioner having a separating portion and a discharging portion. Heat medium which flows out from a refrigerant and heat-medium heat exchanger flows through a heat medium pipe before the heat medium flows into a load-side heat exchanger. The separating portion is provided outside an air conditioning space of the heat medium pipe, and the separating portion separates refrigerant and heat medium from each other. The discharging portion is connected to the separating portion, and discharges refrigerant separated by the separating portion to outside the air conditioning space.

Patent document 2 describes an air-conditioning apparatus which includes a refrigerant circuit, a heat medium circuit, a separating unit and a discharge unit. In the refrigerant circuit, a compressor, a heat-source-side heat exchanger, an expansion unit and a refrigerant-heat medium heat exchanger are connected by a refrigerant pipe, and refrigerant is circulated. In the heat medium circuit, a pump, the refrigerant-heat medium heat exchanger, and a load-side heat exchanger are connected by a heat medium pipe, and a heat medium is circuited. The load-side heat exchanger exchanges heat with air in space to be air-conditioned. The separating unit separates the refrigerant and the heat medium from each other, and is provided at part of the heat medium pipe which is located outside the space to be air-conditioned and in which the heat medium flows after flowing out of the refrigerant-heat medium heat exchanger and before flowing into the load-side heat exchanger. The discharge unit is connected to the separating unit to discharge the refrigerant separated from the heat medium by the separating unit to the outside of the space to be air-conditioned. The separating unit includes a connection port connected with part of the heat medium circuit which is located downstream of the refrigerant-heat medium heat exchanger, a discharge port connected with the discharge unit to allow the refrigerant to be discharged to the discharge unit, and an outlet port connected with part of the heat medium circuit which is located upstream of the load-side heat exchanger, and allowing the heat medium to be discharged. The connection port is located at a higher level than or the same level as the outlet port in a height direction of the separating unit.

### [PRIOR ART DOCUMENTS]

### [PATENT DOCUMENTS]

[Patent Document 1] PCT International Publication No. WO2018/154628
[Patent Document 2] EP 3 587 947 A1

### [SUMMARY OF THE INVENTION]

### [PROBLEM TO BE SOLVED BY THE INVENTION]

The present disclosure provides a heat medium circulation system having excellent safety capable of suppressing the staying of refrigerant in a heat medium circuit even when the refrigerant leaks from a refrigerant circuit through which refrigerant circulates into the heat medium circuit through which heat medium circulates.

### [MEANS FOR SOLVING THE PROBLEM]

In order to solve the problem set out above the invention provides a heat medium circulation system as set out in claim 1. Preferred embodiments of the invention are the subject of the appended claims.

### [EFFECT OF THE INVENTION]

According to the disclosure, it is possible to provide a heat medium circulation system having excellent safety capable of suppressing the staying of refrigerant in a heat medium circuit even when the refrigerant leaks from a refrigerant circuit through which refrigerant circulates into the heat medium circuit through which heat medium circulates. Especially, when the refrigerant is flammable refrigerant, safety can further be enhanced.

### [BRIEF DESCRIPTION OF THE DRAWINGS]

Fig. 1 is a block diagram of a heat medium circulation system in a first embodiment;
Fig. 2 is a sectional view of a gas-liquid separating portion in the first embodiment;
Fig. 3 is a perspective view of the gas-liquid separating portion in the first embodiment;
Fig. 4 is a sectional view of a gas-liquid separating portion in a second embodiment;
Fig. 5 is a block diagram of a heat medium circulation system in the second embodiment; and
Fig. 6 is a perspective view of the gas-liquid separating portion in the second embodiment.

### [MODE FOR CARRYING OUT THE INVENTION]

Embodiments will be described in detail below with reference to the drawings. However, excessively detailed description more than necessary will be omitted in some cases. For example, detailed description of already well known matters, or redundant description of substantially the same configuration will be omitted in some cases. This is for preventing the following description becoming redundant more than necessary, and for making it easy for a person skilled in the art to understand.

The accompanying drawing and the following description are provided so that the person skilled in the art can sufficiently understand the present disclosure, and it is not intended that they limit the subject matter described in claims.

### (First Embodiment)

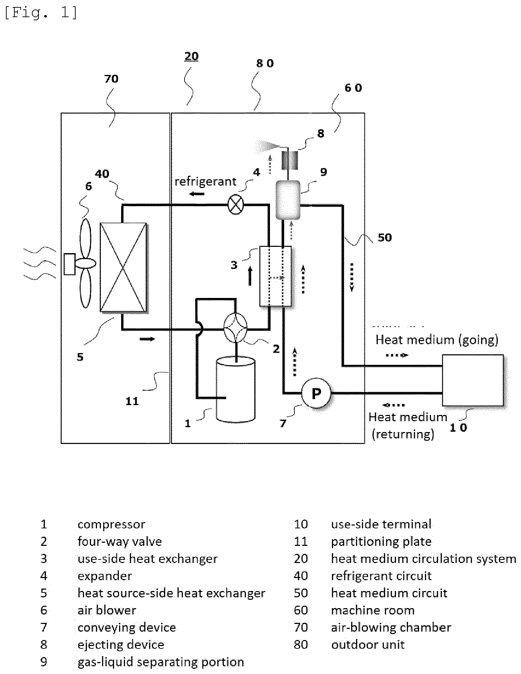

A first embodiment will be described below using Figs. 1 to 3.

### [1-1. Configuration]

In Fig. 1, a heat medium circulation system 20 is composed of an outdoor unit 80 and a use-side terminal 10. The heat medium circulation system 20 includes a refrigerant circuit 40 and a heat medium circuit 50.

The refrigerant circuit 40 is a vapor compression type refrigeration cycle. The refrigerant circuit 40 is configured by connecting a compressor 1, a use-side heat exchanger 3, an expander 4 and a heat source-side heat exchanger 5 to one another through refrigerant pipe. Propane which is flammable refrigerant is used as refrigerant. The propane is heavier than air, and stays at a low position.

The refrigerant which flows through the refrigerant circuit 40 may be R1234yf, R1234ze and R32 which are mildly flammable refrigerants.

The refrigerant circuit 40 is provided with a four-way valve 2 which switches between a heating operation and a cooling operation. In the heating operation, warm water which is heat medium is produced. In the cooling operation, cold water which is heat medium is produced. An air blower 6 for generating air which passes through the heat source-side heat exchanger 5 is provided.

The heat medium circuit 50 is configured by sequentially connecting, to one another, a conveying device 7 which is a conveying pump, the use-side heat exchanger 3, a gas-liquid separating portion 9 and the use-side terminal 10 which is a heating or cooling terminal. The heat medium circuit 50 uses water or antifreeze liquid as the heat medium.

The refrigerant circuit 40 and the heat medium circuit 50 excluding the use-side terminal 10 are accommodated in the outdoor unit 80. The compressor 1, the four-way valve 2, the use-side heat exchanger 3, the expander 4, the conveying device 7, the use-side heat exchanger 3 and the gas-liquid separating portion 9 are accommodated in a machine room 60 in the outdoor unit 80.

The air blower 6 and the heat source-side heat exchanger 5 are accommodated in an air-blowing chamber 70 in the outdoor unit 80. The machine room 60 and the air-blowing chamber 70 are partitioned from each other by a partitioning plate 11.

Here, the gas-liquid separating portion 9 has a function to flow, into the separating portion 9, gas phase refrigerant which leaks from at least the refrigerant circuit 40 into the heat medium circuit 50, and to separate the gas phase refrigerant and liquid phase heat medium from each other. In the gas-liquid separating portion 9, air which is mixed into the liquid phase heat medium can also separate from the liquid phase heat medium.

That is, when a crack is generated in a heat transfer bulkhead of the use-side heat exchanger 3 by a pinhole or repeated pressure variation, gas phase refrigerant which leaks from the refrigerant circuit 40 into the heat medium circuit 50 is pulled out from the heat medium circuit 50 and separated from liquid phase heat medium. The gas-liquid separating portion 9 is placed at the highest position of the heat medium circuit 50.

An ejecting device 8 which ejects at least gas phase refrigerant separated in the gas-liquid separating portion 9 is connected to an upper side of the gas-liquid separating portion 9.

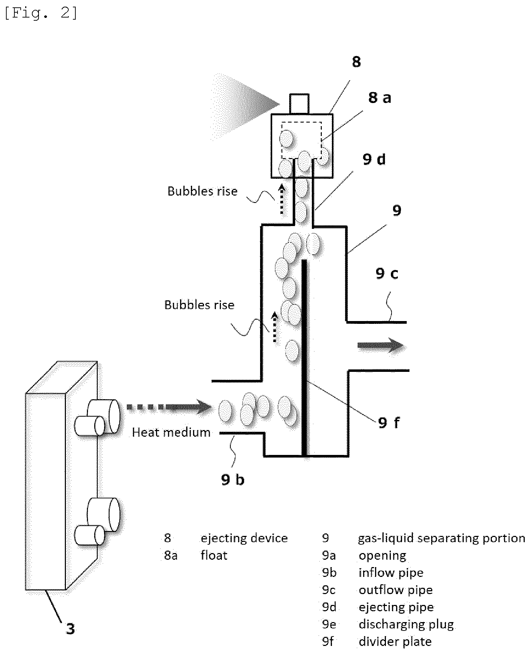

In Fig. 2, if gas phase component of refrigerant is mixed in heat medium which flows out from the use-side heat exchanger 3 in the heat medium circuit 50, liquid phase heat medium and gas phase refrigerant are separated from each other in the gas-liquid separating portion 9. If the gas phase refrigerant flows into the ejecting device 8, a float 8a provided in the ejecting device 8 is pushed down, and the gas phase refrigerant is discharged outside.

An inflow pipe 9b through which at least heat medium flows into the gas-liquid separating portion 9 and an outflow pipe 9c through which heat medium flows out from the gas-liquid separating portion 9 are connected to the gas-liquid separating portion 9. A position where at least the heat medium flows into the gas-liquid separating portion 9 is located lower than a position where heat medium flows out from the gas-liquid separating portion 9.

A position of a heat medium outlet pipe of the use-side heat exchanger 3 of the heat medium circuit 50 and a position of the inflow pipe 9b of the gas-liquid separating portion 9 are located substantially at the same height.

An upper end of a divider plate 9f is located higher than the position where the heat medium flows out from the gas-liquid separating portion 9.

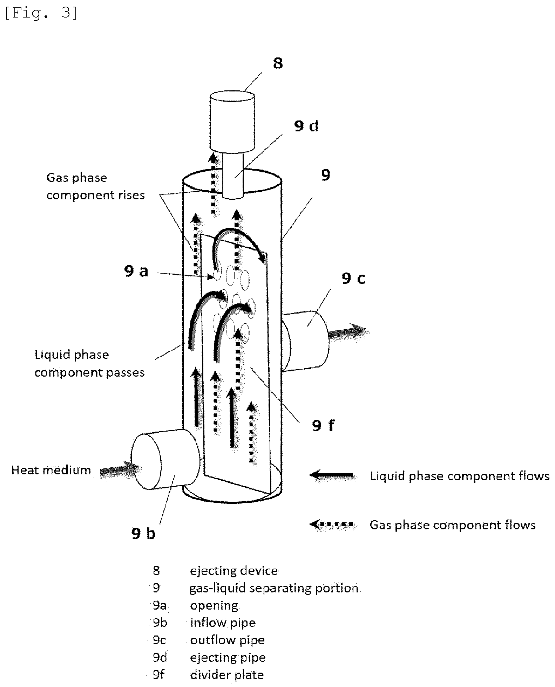

In Fig. 3, a plurality of openings 9a are provided in the divider plate 9f. The plurality of openings 9a are located at positions higher than a position where the heat medium flows out from the gas-liquid separating portion 9.

### [1-2. Action]

Action and effect of the heat medium circulation system 20 having the above-described configuration will be described.

First, action of the heat medium circuit 50 of the heat medium circulation system 20 will be described using Figs. 1 and 2. According to the outline, refrigerant which flows out from the use-side heat exchanger 3 leaks into heat medium before the refrigerant flows into the use-side terminal 10, the heat medium flows into the gas-liquid separating portion 9, liquid phase component and gas phase component are separated from each other, and the separated gas phase component (refrigerant) is discharged and dispersed through the ejecting device 8.

Operations for cooling or heating heat medium is carried out by the use-side heat exchanger 3 of the heat medium circulation system 20. In these operations, when a pinhole or a crack is generated in the heat transfer bulkhead which divides a flow path of refrigerant and a flow path of heat medium of the use-side heat exchanger 3, refrigerant of the refrigerant circuit 40 leaks into the heat medium circuit 50. Therefore, at an outlet of the heat medium circuit 50 of the use-side heat exchanger 3, gas phase refrigerant is mixed into liquid phase heat medium (mixed phase flowing state).

The mixed phase flow of the liquid phase heat medium and the gas phase refrigerant which flow out from the outlet of the heat medium circuit 50 of the use-side heat exchanger 3 flows in in a horizontal direction from the inflow pipe 9b which is located on a lower portion of the gas-liquid separating portion 9.

The mixed phase flow collides against the divider plate 9f which is placed such that it is opposed to a position where the mixed phase flow flows into the gas-liquid separating portion 9, and the mixed phase flow rises on a side where the inflow pipe 9b is connected to a region divided by the divider plate 9f.

Hence, velocity component of the mixed phase flow in the horizontal direction is deleted and velocity component thereof is directed in the vertically upward direction. Further, buoyancy of gas phase refrigerant is also added, and the refrigerant rises, together with liquid phase heat medium, toward an upper portion of the gas-liquid separating portion 9 where the ejecting device 8 is placed.

A portion of bubble state refrigerant which reaches the upper portion of the gas-liquid separating portion 9 moves to the ejecting device 8 as it is, the other bubble state refrigerant collides against an upper surface of the gas-liquid separating portion 9, and ascending flow velocity of the other bubble state refrigerant becomes zero.

A bubble group formed from a large number of fine bubble state refrigerants is prone to stay in the upper portion of the gas-liquid separating portion 9, and only gas phase refrigerant gradually flows into the ejecting device 8 through an ejecting pipe 9d.

If gas phase refrigerants of more than a predetermined amount flow into the ejecting device 8, the float 8a is pushed down and a valve portion (not shown) opens, and the gas phase refrigerant is discharged outside.

Further, since the upper end of the divider plate 9f is located higher than the position where liquid phase heat medium flows out from the gas-liquid separating portion 9, the bubble group of refrigerant does not flow out from the outflow pipe 9c before the bubble group reaches the upper portion of the gas-liquid separating portion 9.

In Fig. 3, the plurality of openings 9a are provided in the divider plate 9f. The plurality of openings 9a are located higher than the position where heat medium flows out from the gas-liquid separating portion 9. Therefore, since the bubble group of refrigerant which is mixed in liquid phase heat medium collides against the divider plate 9f, the bubble group of refrigerant does not flow out directly from the outflow pipe 9c.

According to this, liquid phase heat medium having no bubbles rises on the side of the inflow pipe 9b divided by the divider plate 9f due to buoyancy and inertia force, but the liquid phase heat medium passes through the openings 9a of the divider plate 9f having small flowing resistance and moves to the outflow pipe 9c rather than going around the upper end of the divider plate 9f.

At that time, since the position of the outflow pipe 9c is lower than the position of the openings 9a, the bubble group of refrigerant does not reach the outflow pipe 9c due to effect of buoyancy of the bubbles themselves, and the bubble group of refrigerant rises upward of the gas-liquid separating portion 9.

That is, the gas phase refrigerant does not pass through the openings 9a, and only the liquid phase heat medium passes through the openings 9a and reaches the outflow pipe 9c.

### [1-3. Effect and the like]

As described above, in the embodiment, the heat medium circulation system 20 including: the refrigerant circuit 40 to which the compressor 1, the use-side heat exchanger 3, the expander 4 and the heat source-side heat exchanger 5 are connected and through which refrigerant circulates; the air blower 6 for generating air which passes through the heat source-side heat exchanger 5; the heat medium circuit 50 through which liquid phase heat medium cooled or heated by the use-side heat exchanger 3 circulates by refrigerant discharged from the compressor 1 through the use-side terminal 9; the conveying device 7 provided in the heat medium circuit 50 for circulating heat medium; the gas-liquid separating portion 9 provided in the heat medium circuit 50 downstream of the use-side heat exchanger 3 and upstream of the use-side terminal 10 for separating refrigerant which leaks at least into the heat medium circuit 50 from heat medium; and the ejecting device 8 connected to the gas-liquid separating portion 9 for discharging at least refrigerant separated in the gas-liquid separating portion 9 to outside, wherein the inflow pipe 9b through which at least heat medium flows into the gas-liquid separating portion 9 and the outflow pipe 9c through which heat medium flows out from the gas-liquid separating portion 9 are connected to the gas-liquid separating portion 9, a position where at least heat medium flows into the gas-liquid separating portion 9 is located lower than a position where the heat medium flows out from the gas-liquid separating portion 9.

According to this, the position where at least the heat medium flows into the gas-liquid separating portion 9 is lower than the position where heat medium flows out from the gas-liquid separating portion 9. Therefore, as the bubble group formed from the large number of fine bubble state refrigerant floats in the gas-liquid separating portion 9, diameters of the bubbles become large.

Therefore, rising speed of bubble group is accelerated by increase of buoyancy of the bubble group, only liquid phase heat medium flows out from the outflow pipe 9c, and a moving distance of the liquid phase heat medium becomes short. Therefore, gas-liquid separating performance of the gas-liquid separating portion 9 can be enhanced.

The gas-liquid separating portion 9 is located at the highest position of the heat medium circuit 50, but the inflow pipe 9b of the gas-liquid separating portion 9 is connected to a location close to the lower surface of the gas-liquid separating portion 9. Hence, a difference in height between the outlet of the use-side heat exchanger 3 on the side of the heat medium circuit 50 and the position where at least the heat medium flows into the gas-liquid separating portion 9 is small, and a length of the pipe also becomes short.

According to this, pressure loss and thermal loss caused by the pipe between the use-side heat exchanger 3 and the gas-liquid separating portion 9 become small and as a result, power consumption of the conveying device 7 and the compressor 1 can be reduced.

The divider plate 9f is placed in the gas-liquid separating portion 9 such that the divider plate 9f is opposed to the position where at least the heat medium flows into the gas-liquid separating portion 9.

According to this, the bubble group formed from the large number of bubble state refrigerants which flow into the gas-liquid separating portion 9 is prone to move upward and stay. Therefore, it is possible to prevent the bubble state refrigerant from flowing out toward the use-side terminal 10, and safety can be enhanced.

The upper end of the divider plate 9f is located higher than the position where heat medium flows out from the gas-liquid separating portion 9.

According to this, after the mixed phase flow between liquid phase heat medium and gas phase refrigerant flows into the gas-liquid separating portion 9, the bubble group formed from the large number of bubble state refrigerants is guided upward, and refrigerant is discharged outside through the ejecting device 8. In this process, it is possible to prevent that the refrigerant climbs over the divider plate 9f before the bubble group reaches the ejecting device 8 and the refrigerant flows out from the gas-liquid separating portion 9.

Therefore, since it is possible to prevent refrigerant from flowing out into the use-side terminal 10, safety can be enhanced.

In the divider plate 9f, the openings 9a are provided at positions higher than the position where heat medium flows out from the gas-liquid separating portion 9.

According to this, gas phase refrigerant does not pass through the openings 9a, and only liquid phase heat medium passes through the openings 9a and reaches the outflow pipe 9c. Therefore, it is possible to prevent refrigerant from flowing out from the gas-liquid separating portion 9.

Therefore, since it is possible to prevent refrigerant from flowing out into the use-side terminal 10, safety can be enhanced.

From the above-described fact, even when refrigerant leaks from the refrigerant circuit 40 through which refrigerant circulates to the heat medium circuit 50 through which heat medium circulates, it is possible to prevent refrigerant from staying in the heat medium circuit 50, and it is possible to provide the heat medium circulation system 20 having excellent safety.

Especially, when refrigerant is flammable refrigerant, safety can further be enhanced. When refrigerant is propane, since propane is heavier than air and propane stays in a low position, the above-described effect becomes large.

### (Second Embodiment)

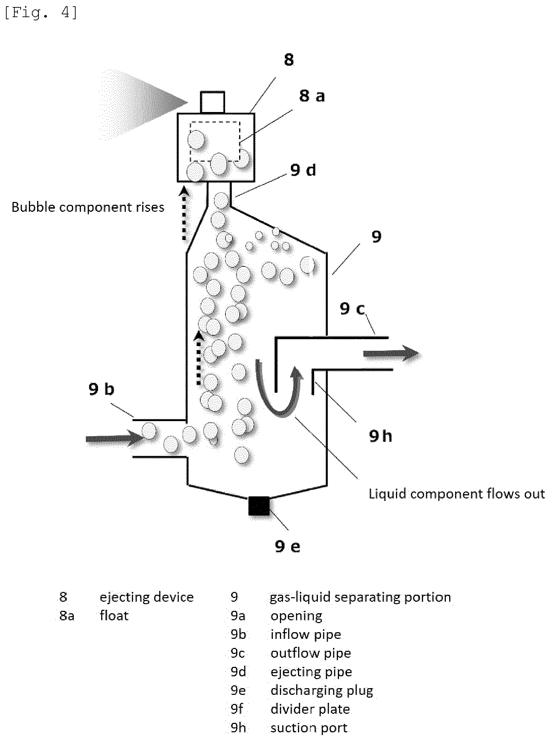

A second embodiment will be described below using Figs. 4 to 6.

### [2-1. Configuration]

The same action and effect as those in the first embodiment will be omitted, and different contents will mainly be described below.

In Fig. 4, a suction port 9h of an outflow pipe 9c through which heat medium flows out from a gas-liquid separating portion 9 is placed downward in a gas-liquid separating portion 9.

A side surface of the gas-liquid separating portion 9 is obliquely formed such that a horizontal cross section area of the side surface becomes smaller upwardly. An ejecting device 8 is connected to the highest portion of the gas-liquid separating portion 9.

The ejecting device 8 is connected to the gas-liquid separating portion 9 in the horizontal direction at a position closer to a position where heat medium flows into the gas-liquid separating portion 9 than a position where heat medium flows out from the gas-liquid separating portion 9. A discharging port is provided in the lowermost surface of the gas-liquid separating portion 9, and the discharging port is normally closed by a discharging plug 9e.

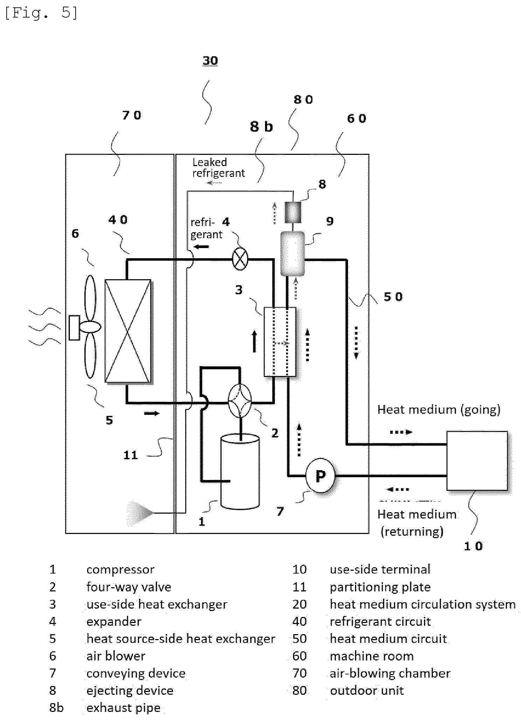

In Fig. 5, the gas-liquid separating portion 9 of the second embodiment is different from the gas-liquid separating portion 9 of the first embodiment in that an exhaust pipe 8b is connected to the ejecting device 8. Refrigerant at least in the ejecting device 8 is discharged into the atmosphere or an air-blowing chamber 70 from the exhaust pipe 8b.

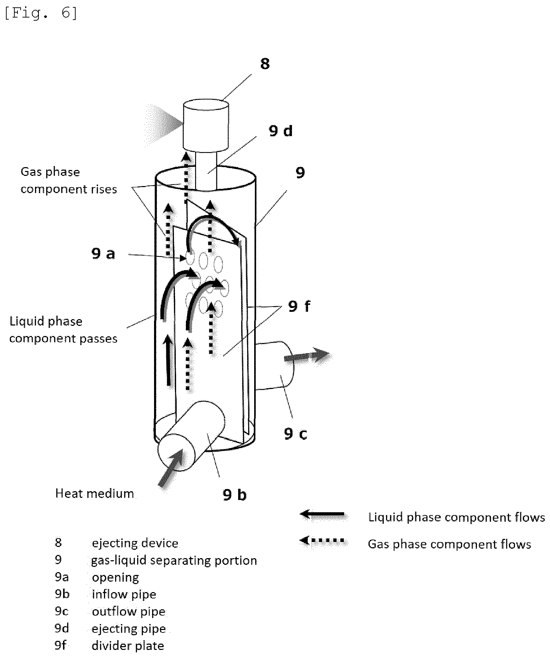

In Fig. 6, a plurality of divider plates 9f are placed in parallel to an interior of the gas-liquid separating portion 9. Depending upon a placing position of the outflow pipe 9c, the divider plates 9f may not be placed in parallel to the interior of the gas-liquid separating portion 9, and an angle may be provided between the plurality of divider plates 9f and the divider plates 9f may be placed obliquely.

### [2-2. Action]

Actions and effects of a heat medium circulation system 30 and the gas-liquid separating portion 9 having the above-described configurations will be described.

In Fig. 4, the suction port 9h of the outflow pipe 9c is downwardly placed in the gas-liquid separating portion 9. Therefore, even if gas phase refrigerant is included in heat medium, buoyancy is applied to the bubble group formed from fine bubble state refrigerants. Further, since the suction port 9h is directed downwardly, it is possible to prevent that the bubble group from coming around from above and from flowing out into the use-side terminal 10 through the suction port 9h.

The gas phase refrigerant flows into the inflow pipe 9b of the gas-liquid separating portion 9 and is mixed into the heat medium. Thereafter, the gas phase refrigerant rises and temporality stays above the gas-liquid separating portion 9 as a bubble group formed from a large number of fine bubble state refrigerants.

A side surface of the gas-liquid separating portion 9 is obliquely formed such that a horizontal cross section area of the side surface becomes smaller upwardly. An ejecting device 8 is connected to the highest portion of the gas-liquid separating portion 9.

The ejecting device 8 is connected to the gas-liquid separating portion 9 in the horizontal direction at a position closer to a position where the heat medium flows into the gas-liquid separating portion 9 than a position where the heat medium flows out from the gas-liquid separating portion 9.

Hence, buoyancy of the bubbles becomes large due to friction resistance between a wall surface and the bubble group formed from the large number of fine bubble state refrigerants which stay in the upper portion of the gas-liquid separating portion 9. The gas phase refrigerant at the highest position easily moves to the connection port of the ejecting pipe 9d located at the highest position, and the gas phase refrigerant easily flows into the ejecting pipe 9d which is connected to the ejecting device 8.

A discharging port is provided in the lowermost surface of the gas-liquid separating portion 9 , and the discharging port is normally closed by the discharging plug 9e. Therefore, if the discharging plug 9e is opened, heat medium which stays in the gas-liquid separating portion 9 can be released.

In Fig. 5, the exhaust pipe 8b is connected to the ejecting device 8 such that refrigerant at least in the ejecting device 8 is discharged into the atmosphere or the air-blowing chamber 70. Therefore, the discharged gas phase refrigerant does not come into contact with or encounter an ignition source such as electric parts or electrical contacts. Especially, if gas is discharged into the air-blowing chamber 70, gas phase refrigerant is dispersed by operating the air blower 6.

In Fig. 6, since the plurality of divider plates 9f are placed in the gas-liquid separating portion 9, it is possible to further enhance the gas-liquid separating performance in the gas-liquid separating portion 9.

### [2-3. Effect and the like]

In the embodiment, as described above, the suction port 9h of the outflow pipe 9c through which heat medium flows out from the gas-liquid separating portion 9 is downwardly placed in the gas-liquid separating portion 9.

According to this, it is possible to prevent the fine bubble state refrigerants from coming around from above and from flowing out into the use-side terminal 10 through the suction port 9h, and safety can be enhanced.

The side surface of the gas-liquid separating portion 9 is obliquely formed such that the horizontal cross section area of the side surface becomes smaller upward. The ejecting device 8 is connected to the uppermost portion of the gas-liquid separating portion 9.

The ejecting device 8 is connected to the gas-liquid separating portion 9 in the horizontal direction at a position closer to the position where the heat medium flows into the gas-liquid separating portion 9 than the position where the heat medium flows out from the gas-liquid separating portion 9.

According to this, buoyancy of bubbles becomes large by friction resistance between the wall surface and the bubble group formed from the large number of fine bubble state refrigerants which stay above the gas-liquid separating portion 9. The gas phase refrigerant easily moves to the connection port of the ejecting pipe 9d which is located at the highest position, and the gas phase refrigerant easily flows into the ejecting pipe 9d connected to the ejecting device 8.

The discharging port is provided in the lowermost surface of the gas-liquid separating portion 9, and the discharging port is normally closed by the discharging plug 9e.

According to this, when the heat medium is replaced at the time of the maintenance operation, heat medium remaining in the gas-liquid separating portion 9 can easily be discharged.

The exhaust pipe 8b is connected to the ejecting device 8 such that refrigerant at least in the ejecting device 8 is discharged into the atmosphere or the air-blowing chamber 70.

According to this, since discharged gas phase refrigerant does not come into contact with or encounter an ignition source such as electric parts or electric contacts, safety can further be enhanced.

Especially if gas phase refrigerant is discharged into the air-blowing chamber 70, the gas phase refrigerant is dispersed by the operation of the air blower 6. When the refrigerant is flammable refrigerant, safety can further be enhanced.

The plurality of divider plates 9f are placed in the gas-liquid separating portion 9. According to this, it is possible to further enhance the gas-liquid separating performance of the gas-liquid separating portion 9.

By the above-described fact, even if refrigerant leaks from the refrigerant circuit 40 through which refrigerant circulates to the heat medium circuit 50 through which heat medium circulates, it is possible to prevent refrigerant from staying in the heat medium circuit 50, and it is possible to provide the heat medium circulation system 20 having excellent safety.

Especially when the refrigerant is flammable refrigerant, safety can further be enhanced. When refrigerant is propane, since propane is heavier than air and propane stays in a low position, the above-described effect becomes large.

### [INDUSTRIAL APPLICABILITY]

The present disclosure can be applied to a heat medium circulation system from which especially flammable refrigerant can leak in a heat medium circuit. More specifically, the patent document be applied to a heat pump liquid heating device and the like.

### [EXPLANATION OF SYMBOLS]

- 1: compressor
- 2: four-way valve
- 3: use-side heat exchanger
- 4: expander
- 5: heat source-side heat exchanger
- 6: air blower
- 7: conveying device
- 8: ejecting device8
- 8a: float
- 8b: exhaust pipe
- 9: gas-liquid separating portion
- 9a: openings
- 9b: inflow pipe
- 9c: outflow pipe
- 9d: ejecting pipe
- 9e: discharging plug
- 9f: divider plate
- 9h: suction port
- 10: use-side terminal
- 11: partitioning plate
- 20: heat medium circulation system
- 30: heat medium circulation system
- 40: refrigerant circuit
- 50: heat medium circuit
- 60: machine room
- 70: air-blowing chamber
- 80: outdoor unit

## Claims

1. A heat medium circulation system comprising: a refrigerant circuit (40) to which a compressor (1), a use-side heat exchanger (3), an expander (4) and a heat source-side heat exchanger (5) are connected and through which refrigerant circulates;
an air blower (6) for generating air which passes through the heat source-side heat exchanger (5);
a heat medium circuit (50) through which liquid phase heat medium cooled or heated by the use-side heat exchanger (3) circulates by the refrigerant discharged from the compressor (1) through a use-side terminal (10) of the heat medium circuit (50);
a conveying device (7) provided in the heat medium circuit (50) for circulating the heat medium;
a gas-liquid separating portion (9) provided in the heat medium circuit (50) downstream of the use-side heat exchanger (3) and upstream of the use-side terminal (10) for separating the refrigerant which leaks at least into the heat medium circuit (50) from the heat medium; and
an ejecting device (8) connected to the gas-liquid separating portion (9) for discharging at least the refrigerant separated in the gas-liquid separating portion (9) to outside, wherein
an inflow pipe (9b) through which at least the heat medium flows into the gas-liquid separating portion (9) and an outflow pipe (9c) through which the heat medium flows out from the gas-liquid separating portion (9) are connected to the gas-liquid separating portion (9), a position where at least the heat medium flows into the gas-liquid separating portion (9) is located lower than a position where the heat medium flows out from the gas-liquid separating portion (9),
**characterized in that**
a divider plate (9f) is placed in the gas-liquid separating portion (9) such that the divider plate (9f) is opposed to the position where at least the heat medium flows into the gas-liquid separating portion (9), and wherein in the divider plate (9f), an opening (9a) is provided at a position higher than the position where the heat medium flows out from the gas-liquid separating portion (9).

2. The heat medium circulation system according to claim 1, wherein an upper end of the divider plate (9f) is located at a position higher than the position where the heat medium flows out from the gas-liquid separating portion (9).

3. The heat medium circulation system according to any one of claims 1 or 2, wherein a suction port (9h) of the outflow pipe (9c) through which the heat medium flows out from the gas-liquid separating portion (9) is downwardly placed in the gas-liquid separating portion (9).

4. The heat medium circulation system according to any one of claims 1 to 3, wherein a side surface of the gas-liquid separating portion (9) is obliquely formed such that a cross section area of the gas-liquid separating portion (9) in a horizontal direction thereof becomes smaller upward, and the ejecting device (8) is connected to an uppermost portion of the gas-liquid separating portion (9).

5. The heat medium circulation system according to any one of claims 1 to 4, wherein in a horizontal direction of the gas-liquid separating portion (9), the ejecting device (8) is connected to a position closer to the position where at least the heat medium flows into the gas-liquid separating portion (9) than the position where the heat medium flows out from the gas-liquid separating portion (9).

6. The heat medium circulation system according to any one of claims 1 to 5, wherein a discharging port is provided in a lowermost surface of the gas-liquid separating portion (9).

7. The heat medium circulation system according to any one of claims 1 to 6, further comprising an air-blowing chamber (70) where the air blower (6) is placed, wherein the refrigerant is a mildly flammable or flammable refrigerant, and an exhaust pipe (8b) is connected to the ejecting device (8) such that the refrigerant in at least the ejecting device (8) is discharged into an atmosphere or the air-blowing chamber (70).

## Patentansprüche

1. Wärmemedium-Kreislaufsystem, umfassend: einen Kältemittelkreislauf (40), an den ein Kompressor (1), ein nutzungsseitiger Wärmetauscher (3), eine Expansionseinrichtung (4) und ein wärmequellenseitiger Wärmetauscher (5) angeschlossen sind und durch den Kältemittel zirkuliert;
ein Luftgebläse (6) zur Erzeugung einer Luftströmung durch den wärmequellenseitigen Wärmetauscher (5);
einen Wärmemediumkreislauf (50), durch den flüssiges Wärmemedium, das durch den nutzungsseitigen Wärmetauscher (3) gekühlt oder erwärmt worden ist, zirkuliert, mittels des von dem Kompressor (1) durch einen nutzungsseitigen Anschluss (10) des Wärmemediumkreislaufs (50) abgegebenen Kältemittels;
eine in dem Wärmemediumkreislauf (50) vorgesehene Fördervorrichtung (7) zum Umwälzen des Wärmemediums;
einen in dem Wärmemediumkreislauf (50) stromabwärts des nutzungsseitigen Wärmetauschers (3) und stromaufwärts des nutzungsseitigen Anschlusses (10) vorgesehenen Gas-Flüssigkeit-Abscheideabschnitt (9) zum Abscheiden des zumindest in den Wärmemediumkreislauf (50) austretenden Kältemittels aus dem Wärmemedium; und
eine mit dem Gas-Flüssigkeit-Abscheideabschnitt (9) verbundene Ausstoßvorrichtung (8) zum Abgeben zumindest des in dem Gas-Flüssigkeit-Abscheideabschnitt (9) abgeschiedenen Kältemittels nach außen, wobei
eine Einlaufleitung (9b), durch die wenigstens das Wärmemedium in den Gas-Flüssigkeit-Abscheideabschnitt (9) einströmt, und eine Auslaufleitung (9c), durch die das Wärmemedium aus dem Gas-Flüssigkeit-Abscheideabschnitt (9) ausströmt, mit dem Gas-Flüssigkeit-Abscheideabschnitt (9) verbunden sind, wobei eine Position, an der wenigstens das Wärmemedium in den Gas-Flüssigkeit-Abscheideabschnitt (9) einströmt, niedriger liegt als eine Position, an der das Wärmemedium aus dem Gas-Flüssigkeit-Abscheideabschnitt (9) ausströmt,
**dadurch gekennzeichnet, dass**
eine Trennplatte (9f) in dem Gas-Flüssigkeit-Abscheideabschnitt (9) so angeordnet ist, dass die Trennplatte (9f) der Position gegenüberliegt, an der wenigstens das Wärmemedium in den Gas-Flüssigkeit-Abscheideabschnitt (9) einströmt, und wobei in der Trennplatte (9f) eine Öffnung (9a) an einer Position vorgesehen ist, die höher liegt als die Position, an der das Wärmemedium aus dem Gas-Flüssigkeit-Abscheideabschnitt (9) ausströmt.

2. Wärmemedium-Kreislaufsystem nach Anspruch 1, wobei ein oberes Ende der Trennplatte (9f) an einer Position angeordnet ist, die höher liegt als die Position, an der das Wärmemedium aus dem Gas-Flüssigkeit-Abscheideabschnitt (9) ausströmt.

3. Wärmemedium-Kreislaufsystem nach einem der Ansprüche 1 oder 2, wobei ein Sauganschluss (9h) der Auslaufleitung (9c), durch die das Wärmemedium aus dem Gas-Flüssigkeit-Abscheideabschnitt (9) ausströmt, im Gas-Flüssigkeit-Abscheideabschnitt (9) nach unten platziert ist.

4. Wärmemedium-Kreislaufsystem nach einem der Ansprüche 1 bis 3, wobei eine Seitenfläche des Gas-Flüssigkeit-Abscheideabschnitts (9) schräg ausgebildet ist, so dass eine Querschnittsfläche des Gas-Flüssigkeit-Abscheideabschnitts (9) in dessen horizontaler Richtung nach oben hin kleiner wird, und die Ausstoßvorrichtung (8) mit einem obersten Abschnitt des Gas-Flüssigkeit-Abscheideabschnitts (9) verbunden ist.

5. Wärmemedium-Kreislaufsystem nach einem der Ansprüche 1 bis 4, wobei die Ausstoßvorrichtung (8) mit einer Position verbunden ist, die in einer horizontalen Richtung des Gas-Flüssigkeit-Abscheideabschnitts (9) näher an der Position liegt, an der zumindest das Wärmemedium in den Gas-Flüssigkeit-Abscheideabschnitt (9) einströmt, als an der Position, an der das Wärmemedium aus dem Gas-Flüssigkeit-Abscheideabschnitt (9) ausströmt.

6. Wärmemedium-Kreislaufsystem nach einem der Ansprüche 1 bis 5, wobei in einer untersten Fläche des Gas-Flüssigkeit-Abscheideabschnitts (9) ein Ablaufanschluss vorgesehen ist.

7. Wärmemedium-Kreislaufsystem nach einem der Ansprüche 1 bis 6, das ferner eine Luftblaskammer (70) umfasst, in der das Luftgebläse (6) angeordnet ist, wobei das Kältemittel ein mäßig entflammbares oder entflammbares Kältemittel ist und ein Abgasrohr (8b) mit der Ausstoßvorrichtung (8) verbunden ist, so dass das Kältemittel in wenigstens der Ausstoßvorrichtung (8) in die Atmosphäre oder die Luftblaskammer (70) abgegeben wird.

## Revendications

1. Système de circulation de fluide caloporteur comprenant : un circuit (40) à fluide frigorigène auquel un compresseur (1), un échangeur de chaleur (3) côté utilisation, un détendeur (4) et un échangeur de chaleur (5) côté source de chaleur sont reliés et à travers lequel circule un fluide frigorigène ;
une soufflante d'air (6) destinée à générer de l'air qui traverse l'échangeur de chaleur (5) côté source de chaleur ;
un circuit (50) à fluide caloporteur à travers lequel circule de fluide caloporteur en phase liquide refroidi ou chauffé par l'échangeur de chaleur (3) côté utilisation au moyen du fluide frigorigène évacué du compresseur (1) à travers un terminal (10) côté utilisation du circuit (50) à fluide caloporteur ;
un dispositif de transport (7) prévu dans le circuit (50) à fluide caloporteur et destiné à faire circuler le fluide caloporteur ;
une partie de séparation gaz-liquide (9) prévue dans le circuit (50) à fluide caloporteur en aval de l'échangeur de chaleur (3) côté utilisation et en amont du terminal (10) côté utilisation et destinée à séparer le fluide frigorigène qui fuit au moins dans le circuit (50) à fluide caloporteur à partir du fluide caloporteur ; et
un dispositif d'éjection (8) relié à la partie de séparation gaz-liquide (9) et destiné à évacuer au moins le fluide frigorigène séparé dans la partie de séparation gaz-liquide (9) vers l'extérieur, dans lequel
un tuyau d'entrée (9b) à travers lequel au moins le fluide caloporteur s'écoule dans la partie de séparation gaz-liquide (9) et un tuyau de sortie (9c) à travers lequel le fluide caloporteur s'écoule hors de la partie de séparation gaz-liquide (9) sont reliés à la partie de séparation gaz-liquide (9), une position dans laquelle au moins le fluide caloporteur s'écoule dans la partie de séparation gaz-liquide (9) étant située plus bas qu'une position dans laquelle le fluide caloporteur s'écoule hors de la partie de séparation gaz-liquide (9),
**caractérisé en ce que**
une plaque de séparation (9f) est placée dans la partie de séparation gaz-liquide (9) de telle sorte que la plaque de séparation (9f) est opposée à la position dans laquelle au moins le fluide caloporteur s'écoule dans la partie de séparation gaz-liquide (9), et une ouverture (9a) étant prévue dans la plaque de séparation (9f) en une position plus élevée que la position dans laquelle le fluide caloporteur s'écoule hors de la partie de séparation gaz-liquide (9).

2. Système de circulation de fluide caloporteur selon la revendication 1, dans lequel une extrémité supérieure de la plaque de séparation (9f) est située en une position plus élevée que la position dans laquelle le fluide caloporteur s'écoule hors de la partie de séparation gaz-liquide (9).

3. Système de circulation de fluide caloporteur selon l'une quelconque des revendications 1 ou 2, dans lequel un orifice d'aspiration (9h) du tuyau de sortie (9c) à travers lequel le fluide caloporteur s'écoule hors de la partie de séparation gaz-liquide (9) est placé vers le bas dans la partie de séparation gaz-liquide (9).

4. Système de circulation de fluide caloporteur selon l'une quelconque des revendications 1 à 3, dans lequel une surface latérale de la partie de séparation gaz-liquide (9) est formée obliquement de telle sorte qu'une surface de section transversale de la partie de séparation gaz-liquide (9) dans une direction horizontale correspondante devient plus petite vers le haut et le dispositif d'éjection (8) est relié à une partie la plus élevée de la partie de séparation gaz-liquide (9).

5. Système de circulation de fluide caloporteur selon l'une quelconque des revendications 1 à 4, dans lequel, dans une direction horizontale de la partie de séparation gaz-liquide (9), le dispositif d'éjection (8) est relié à une position plus proche de la position dans laquelle au moins le fluide caloporteur s'écoule dans la partie de séparation gaz-liquide (9) que la position dans laquelle le fluide caloporteur s'écoule hors de la partie de séparation gaz-liquide (9).

6. Système de circulation de fluide caloporteur selon l'une quelconque des revendications 1 à 5, dans lequel un orifice d'évacuation est prévu dans une surface la plus basse de la partie de séparation gaz-liquide (9).

7. Système de circulation de fluide caloporteur selon l'une quelconque des revendications 1 à 6, comprenant en outre une chambre de soufflage d'air (70) dans laquelle la soufflante d'air (6) est placée, le fluide frigorigène étant un fluide frigorigène modérément inflammable ou inflammable et un tuyau d'échappement (8b) étant relié au dispositif d'éjection (8) de telle sorte que le fluide frigorigène dans au moins le dispositif d'éjection (8) est évacué dans une atmosphère ou la chambre de soufflage d'air (70).
